## Europäisches Patentamt
## European Patent Office
## Office européen des brevets

(11) Veröffentlichungsnummer : **0 133 460 B1**

(12) **EUROPÄISCHE PATENTSCHRIFT**

(45) Veröffentlichungstag der Patentschrift :
17.05.89

(51) Int. Cl.⁴ : **B 29 B    9/16**, F 26 B    5/08

(21) Anmeldenummer : **84106469.4**

(22) Anmeldetag : **06.06.84**

(54) Vorrichtung zum Entwässern und Trocknen von Kunststoffgranulat.

(30) Priorität : 05.08.83 DE 3328303

(43) Veröffentlichungstag der Anmeldung :
27.02.85 Patentblatt 85/09

(45) Bekanntmachung des Hinweises auf die Patenterteilung : 17.05.89 Patentblatt 89/20

(84) Benannte Vertragsstaaten :
BE FR GB IT NL

(56) Entgegenhaltungen :
EP–A– 0 060 572
CH–A–   620 859
DE–A– 3 004 682
DE–A– 3 120 792
FR–A– 2 138 656
US–A– 3 458 045
US–A– 4 126 947
KUNSTSTOFFE, Band 61, Nr. 11, November 1971, Seiten 801,802; V. DUDLEY: "Zentrifugal-Abscheider zum Entwässern von Granulaten"

(73) Patentinhaber : **Werner & Pfleiderer GmbH**
**Theodorstrasse 10 Postfach 30 12 20**
**D-7000 Stuttgart 30 (DE)**

(72) Erfinder : **Rudolph, Joachim, Ing.(grad.)**
**Keltenstrasse 46**
**D-7252 Weil der Stadt (DE)**

## Beschreibung

Die Erfindung betrifft eine Vorrichtung zum Entwässern und Trocknen von Kunststoffgranulat nach der im Oberbegriff des Hauptanspruchs vorgesetzten Art.

Das mittels Aufbereitungsanlage erzeugte Kunststoffgranulat erfordert regelmäßig eine Nachbehandlung, die im wesentlichen darin besteht das Kunststoffgranulat im Wasserstrom zu kühlen, vom Transportwasser zu trennen und von an der Oberfläche anhaftendem Wasser zu befreien.

Die bekannte Nachbehandlungsvorrichtungen weisen daher eine Anzahl räumlich aufwendiger durch Rohrführungen miteinander verbundener Einrichtungen auf, die der Schneideinrichtung für das Kunststoffgranulat nachgeschaltet sind.

Ein wesentlicher Bestandteil dieser Einrichtungen bildet der Entwässerungsrotor, in welchem das Kunststoffgranulat-Wassergemisch mechanisch getrennt und Speicher- bzw. Tankeinrichtungen zugeführt wird.

Von besonderem Nachteil ist der insgesamt hohe Platzbedarf dieser zusammenhängend aus mehreren Einrichtungen gebildeten Entsässerungsvorrichtung und die hierin gespeicherte und umlaufende große Wassermenge.

Dies wirkt sich besonders nachteilig beim Produktwechsel, d. h. bei Umstellung der Gesamtanlage auf eine andere Produktart aus. Da kein Restgranulat des vorangegangenen Produktes in dem Granulat-Wasser-Transportbereich verbleiben darf, muß vor der Produkt-Umstellung das System vollständig gereinigt werden. Vielfach ist auch ein völliger Austausch des in der Nachbehandlungsanlage gespeicherten Wassers erforderlich was sehr zeitraubend und kostspielig ist.

Ein weiterer Nachteil bildet der für die mechanische Wasserabtrennung benötigte hohe Energieaufwand und die Lärmentwicklung.

Aus der US-A-4126947 ist eine Vorrichtung zur Ablagerung und Trocknung von in Flüssigkeiten in Form einer Suspension vorliegenden Produktgemischen aus Sand, Metallen wie auch chemischen Produkten bekannt.

Diese weist einen über die Gesamtlänge der ersten Förderstufe eines Entwässerungsrotors sich erstreckenden Zulauftopf auf unter Ausbildung einer lediglich den Trocknungsvorgang begünstigenden Sogwirkung. Ein Gehäuse zur Speicherung des Abtropfwassers ist nicht vorgesehen.

Die Entwässerung eines Kunststoffgranulat-Wassergemisches mit nahezuvollständigem Entzug des Wasseranteils innerhalb der ersten Förderstufe ist nicht erreicht, sodaß hiernach weder die Nachbehandlung einer breiten Palette von Kunststoff-Produkten noch ein vereinfachter Produktwechsel ermöglicht ist.

Die DE-A-3120792 zeigt einen Granulat-Trockner, bei dem das Kunststoffgranulat-Wassergemisch einem in einem Gehäuse vertikal gelagerten Entwässerungsrotor zugeführt wird. Die Zuführung erfolgt stirnseitig durch den Boden eines den Entwässerungsrotor umgebenden Siebkörpers, die Ableitung des abgeschiedenen Wassers über einen Anschluß im Boden des Gehäuses. Dabei wird das vollständige Granulat-Wassergemisch für eine partielle Wasserabtrennung in der ersten Rotorstufe voll beschleunigt und gegen das Sieb geschleudert, wofür ein beträchtlicher Energieaufwand vonnöten ist.

Kunststoffgranulat mit einem spezifischen Gewicht größer 1 ist mit der bekannten Vorrichtung nur schwierig zu entwässern, da sich die Zuführung leicht zusetzt.

Der Erfindung liegt die Aufgabe zugrunde, eine Vorrichtung der vorausgesetzten Art zu schaffen, die bei erheblich verringertem Raumbedarf die Nachbehandlung einer breiten Produktpalette an Kunststoffgranulat ermöglicht und den Produktwechsel vereinfacht.

Diese Aufgabe ist nach der Erfindung gemäß den kennzeichnenden Merkmalen des Patentanspruches 1 gelöst.

Weitere vorteilhafte Ausgestaltungen der Erfindung ergeben sich aus den Unteransprüchen.

Der gemäß der Erfindung nach Patentanspruch 1 im Gehäuse angeordnete und die erste Förderstufe des Entwässerungsrotors umschließende Auffangbehälter bewirkt eine räumlich Begrenzung und optimale Funktion der ersten der Vorentwässerung dienenden Förderstufe.

Durch die räumliche Begrenzung wird erreicht, daß das den Entwässerungsrotor aufnehmende Gehäuse zugleich die Funktion eines Wasserspeichers übernimmt, dem so das Abtropfwasser unmittelbar am Entstehungsort zugeführt werden kann. Das Wasserspeichervolumen kann hierdurch auf das absolut notwendige Maß begrenzt bleiben, so daß bei Produktwechsel keine Rohrführungen sondern nur das im Gehäuse befindliche Wasser gereinigt oder ausgetauscht werden muß. Wasserspeicher und Entwässerungsrotor befinden sich baulich auf einer Ebene, das Wasser-Granulatgemisch ist in Höhe des Wasserspeichers zuführbar.

Weiterhin wird durch die räumliche Begrenzung der ersten Förderstufe mittels Auffangbehälter erreicht, daß der Hauptanteil des abgeschiedenen Wassers, welcher in der ersten Förderstufe aufgrund deren Gestaltung sich bildet, über einen Siebkörper unmittelbar dem Ansaugebereich einer mit dem Gehäuse verbundenen Saugpumpe zugeführt wird wodurch in kürzester Zeit das Transportwasser seine Betriebstemperatur erreicht.

Die sich aus der Gestaltung der ersten Förderstufe ergebende optimale Funktion ist auch dadurch erreicht, daß das Granulat-Wassergemisch nahezu drucklos im Zulauftopf innerhalb des Auffangbehälters aufgenommen und über eine relativ lange Förderstrecke mittels Schneckensegmenten nach oben gefördert wird, so daß hier bereits bis zu 98 % des Wasseranteils abgesondert werden.

Eine Rotationsbeschleunigung des Wasseranteils unterbleibt hierdurch im wesentlichen. Das bei bestimmten Kunststoffarten aufgrund höheren spezifischen Gewichts leicht absinkende Kunststoffgranulat wird durch die Schneckensegmente am Grund des Zulauftopfes leicht aufgenommen.

Durch eine zur Längsachse des Gehäuses parallel versetzte Anordnung des Auffangbehälters im Gehäuse verringern sich die Rohrführungen für die Zuleitung des Granulat-Wassergemisches und der Pumpensaugleitung. Der Wasserspeicher im Gehäuse dämpft die Geräuschentwicklung des Entwässerungsrotors in erheblichem Maße.

In einer weiteren Ausgestaltung der Erfindung nach Anspruch 3 steht der Ansaugpumpe zur Förderung von Transport- und Kühlwasser ein ausreichendes und regelbares Wasserspeichervolumen zur Verfügung.

Eine weitere Ausgestaltung der Erfindung nach Anspruch 4 ermöglicht eine genaue an die erste Förderstufe angepaßte Fixierung des Zulauftopfes zum Zweck einer wirkungsvollen Granulatförderung und Wasserabscheidung. Diesem Ziel dient auch die Ausbildung nach Anspruch 5, in dem das Granulat mittels tangentialer oberhalb des Anschlusses der Saugpumpe erfolgenden Zuführung praktisch drucklos in die Gänge der Schneckensegmente eingespeist wird.

Nach den Merkmalen des Anspruches 6 lassen sich vorteilhaft auch solche Kunststoffgranalien behandeln, die nur kurze Verweilzeiten im Wasser vertragen wie beispielsweise Polyamid. Die Lagerung des Kerndurchmessers der ersten Förderstufe verhindert das Absetzen von Granulat am Boden des Zulauftopfes.

Entsprechend einer Ausgestaltung der Erfindung nach Anspruch 7 wird erreicht, daß das abgeschiedene Transportwasser nicht unmittelbar über dem Ansaugbereich der Pumpe in den Ansaugtopf fällt sondern in diesen seitlich abfließend eintritt um ein Aufschäumen und Einschleusen von Luft zu verhindern.

In einer weiteren Ausgestaltung der Erfindung nach Anspruch 8 ist erreicht, daß über die weitere und/oder die Endstufe des Entwässerungsrotors ausgetragene Flusen aufgefangen werden zur Sicherung des Wasserspeichers im Gehäuse vor Schmutzteilchen.

Bei großen Durchsatzmengen an Kunststoffgranulat ist es vorteilhaft eine weitere der ersten Förderstufe abschließend nachgeordnete Förderstufe kegelförmig auszubilden um so gezielt größere Wassermengen abzuscheiden.

Die Erfindung ist des näheren nachfolgend an Hand der in den Zeichnungen dargestellten Ausführungsbeispiele näher erläutert.

Hierin zeigen :

Fig. 1 einen Längsschnitt durch die Vorrichtung mit Wasserspeicher und Entwässerungsrotor

Fig. 2 einen Längsschnitt durch die Vorrichtung in einer anderen Ausbildung

Fig. 3 eine Ansicht der Vorrichtung nach Fig. 1 von oben

Fig. 4 einen Teilschnitt der Vorrichtung gemäß Schnittlinie IV-IV nach Fig. 1

Fig. 5 einen Teilschnitt der Vorrichtung gemäß Schnittlinie V-V nach Fig. 1

Die Vorrichtung besteht aus einem mittels Blechmantel 2 gebildeten Gehäuse 1, dessen Hohlraum durch ein eine Öffnung 4 freilassendes Gehäuse-Oberteil 3 abgedeckt ist. Die Öffnung 4 ist durch einen Gehäusedeckel 5 verschließbar und ermöglicht einen raschen Zugang und eine Sichtkontrolle in das Innere des Gehäuses 1, das als Wasserspeicher dient.

Vertikal in das Gehäuse 1 ragend und exzentrisch zur Gehäusemittenachse ist am Gehäuse-Oberteil 3 ein mehrstufiger Entwässerungsrotor 6 angeflanscht, dessen Entwässerungsstufen sich ins Innere des Gehäuses 1 erstrecken.

Ein am Boden 7 des Gehäuses 1 wasserdicht befestigter Auffangbehälter 8 umschließt konzentrisch eine erste Förderstufe 9 des Entwässerungsrotors 6.

Die Länge des Auffangbehälters 8 bestimmt hierbei die Höhe des Wasserspiegels 17 im Gehäuse 1, so daß die Wassersäulen im Auffangbehälter 8 und im Gehäuse 1 nicht miteinander kommunizieren.

Ein Anschluß 10 verbindet den Auffangbehälter 8 mit einer am Gehäuse 1 befestigten Saugpumpe 11, die von einem Motor 12 angetrieben ist.

In diesem Bereich ist der Auffangbehälter 8 durch Erweiterung seines Außendurchmessers in Form eines Ansaugtopfes 13 ausgebildet, wobei diese Querschnittserweiterung eine Erhöhung des Speichervolumens im Ansaugbereich der Saugpumpe 11 bewirkt.

Ein Schwimmerventil 22 dient der Regelung des Wasserstandes 23 im Ansaugtopf 13 durch Ergänzung des Wassers aus dem Wasserspeicher im Gehäuse 1.

Im Inneren des Auffangbehälters 8 befindet sich ein zylinderförmiger Zulauftopf 14, der an einer im Boden 7 des Gehäuses 1 verankerten Stütze 15 befestigt ist. Dieser Zulauftopf 14 kann hierbei austauschbar angeordnet sein. Er umgibt einen Teil der Förderstufe 9 des Entwässerungsrotors 6 ebenfalls konzentrisch.

Eine tangential in den Zulauftopf 14 einmündende Produkteinlaßleitung 16 dient zu dessen Verbindung mit einem nicht näher dargestellten Granuliergehäuse aus welchem Kunststoff-Granulat mittels Wasser ausgetragen wird. Je nach Verfahrensaufgabe ist der zylinderförmige Zulauftopf 14 unterschiedlich ausgebildet.

Bei der Behandlung von Kunststoff-Granulat dessen Verweilzeit in Wasser kurz bemessen sein soll, wie z. B. bei Polyamid oder Glasfaserverstärkten Kunststoffen, ist die Zylinderwandung des Zulauftopfes 14 aus einem Lochblech gestaltet, so daß schon unmittelbar bei Eintritt des Granulat-Wassergemisches im Zulauftopf 14 eine Entwässerung eintritt.

In allen anderem Fällen insbesondere bei der Behandlung von Kunststoff-Granulat mit einem spez. Gewicht < 1 besteht die Zylinderwandung des Zulauftopfes 14 aus einem Vollmantel, wobei das Kunststoff-Granulat durch den sich bildenden Wassersumpf vorteilhaft in die Förderstufe 9 eingeschwemmt wird. Die tangential in den Zulauftopf 14 einmündende Produkteinlaßleitung 16 unterstützt diesen Effekt.

Die in Förderrichtung des Kunststoffgranulats gesehen erste Förderstufe 9 des Entwässerungsrotor 6 ist auf ihrer Gesamtlänge mit Schneckensegmenten 18 bestückt. Dabei weisen diese Schneckensegmente 18 eine in Förderrichtung zunehmende Steigung auf, so daß das Kunststoff-Granulat mit längsaxial zunehmender Fördergeschwindigkeit aus dem Zulauftopf 14 transportiert und in aufgelockertem Strom gegen ein den Entwässerungsrotor 6 umschließenden Siebkörper 19 geschleudert wird. Dieser Siebkörper 19, dessen Aussenabmessungen den Stufen des Entwässerungsrotors 6 angepaßt sind, ist einerseits mit dem Zulauftopf 14 durch Steckverbindung lösbar verbunden und zum anderen im Gehäuse-Oberteil 3 lösbar verankert.

Ebenfalls im Gehäuse-Oberteil 3 lösbar verankert ist ein Flusenfilter 20, dessen Aufgabe es ist ausgeschleuderte Schmutzteilchen und Flusen zurückzuhalten.

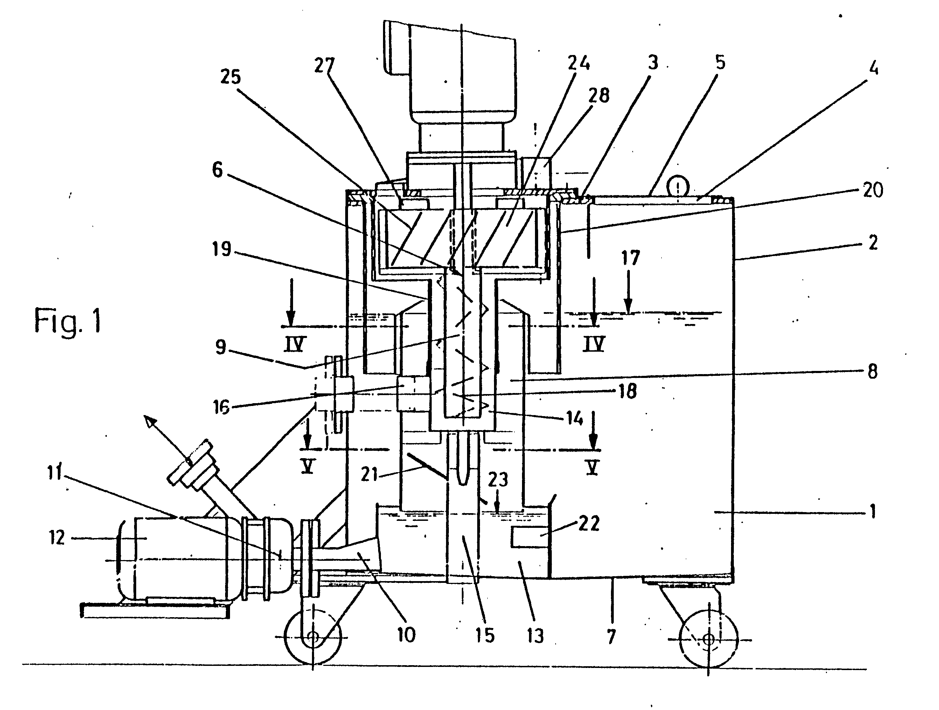

Der in Fig. 1 gezeigte Flusenfilter 20 ist bei stillstehender Vorrichtung zur Renigung herausnehmbar.

Eine weitere Förderstufe 24 mit schräg an einem zylindrischen Teil größeren Durchmessers angeordneten Paddeln 25 dient der Entfernung des noch durch das Kunststoff-Granulat mitgeschleppten Restwassers in der Größenordnung von ca. 1-2 %.

Der Förderstufe 24 folgt ein zylinderförmiges Gebläseteil 26 mit Flügeln 27, dessen Gebläseluft dem Abtransport des Kunststoff-Granulats über eine Rohrstrecke 28 dient, die wendelförmig nach oben verläuft, im Bedarfsfalle auch in einer Ebene tangential austreten kann.

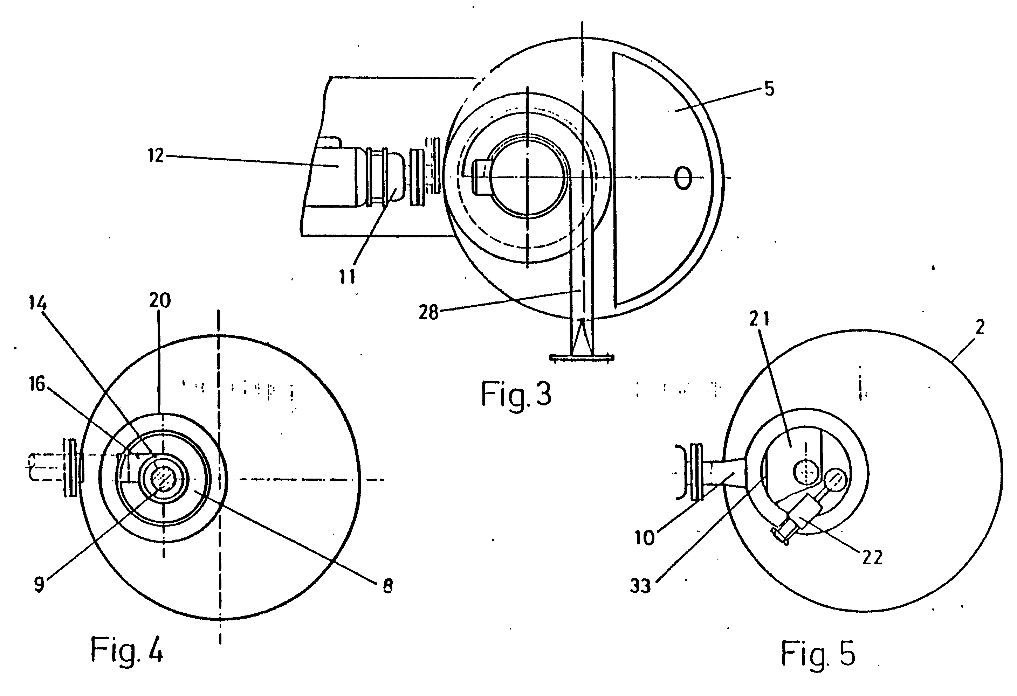

Im unteren Bereich des Auffangbehälters 8 ist ein in dessen Querschnitt eingepasstes Leitblech 21 vorgesehen, dessen Abmessungen wie insbesondere Fig. 5 zeigt im Auffangbehälter 8 einen reduzierten Querschnitt freiläßt. Der dem Anschluß 10 gegenüberliegend angeordnete freie Querschnitt beträgt weniger als 1/3 der Querschnittsfläche des Auffangbehälters 8. Das abgeschiedene Wasser wird hierdurch dem Ansaugtopf 13 beruhigt zugeführt und ein Aufschäumen vermieden.

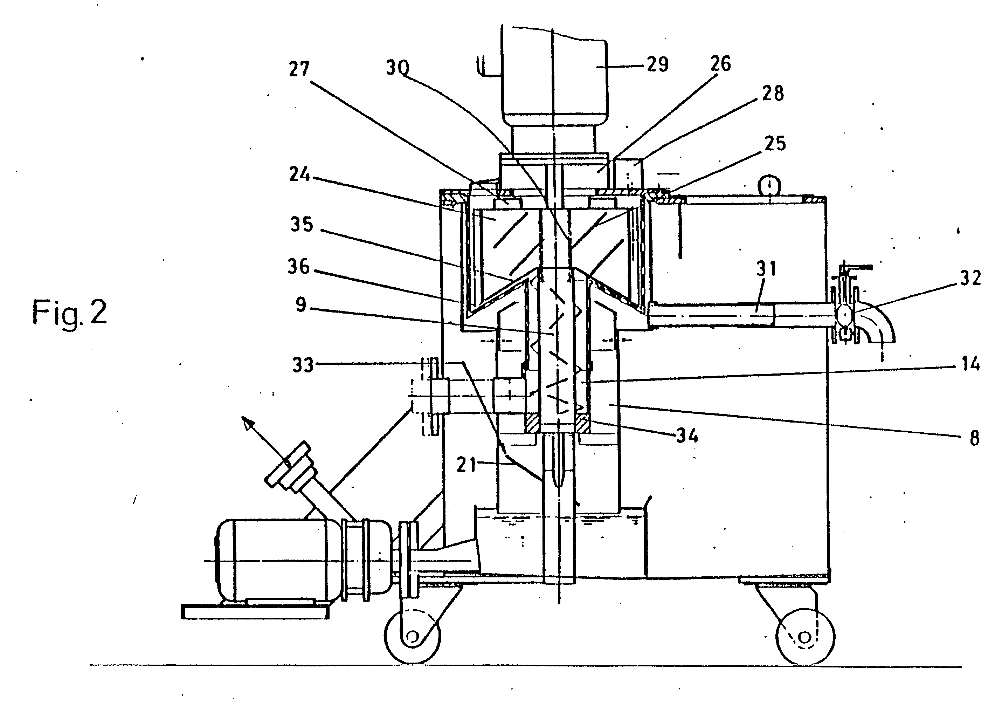

Wie Fig. 2 zeigt ist es vorteilhaft einen Teil der über den Antriebsmotor 29 vorgewärmten Gebläseluft über Durchtrittsöffnungen 30 im Entwässerungsrotor 6 dem oberen Bereich der Förderstufe 9 zuzuführen. Dadurch ist bereits in diesem Bereich ein nahezu trockenes Kunststoff-Granulat erzielbar und eine Nachtrocknung in der Rohrstrecke 28 nicht weiter erforderlich. Bei der Be-handlung nicht schwimmfähiger Kunststoff-Gra-nulate ist es vorteilhaft die Förderstufe 9 mit ihrem Kerndurchmesser im Zulauftopf 14 in einem Lager 34 zu führen.

Dadurch wird verhindert, daß sich absinkendes Granulat zwischen dem Boden des Zulauftopfes 14 und der Förderstufe 9 verkeilt.

Statt dessen kann aber auch eine an der Stirnfläche der Förderstufe 9 angebrachte nicht näher dargestellte Spiralwendel diese Aufgabe überneh-men.

Der ersten Förderstufe 9 folgt abschließend eine stirnseitig mit einer kegelförmigen Ausneh-mung 35 ausgebildete zweite Förderstufe 24. Die Flügelspitzen 36 weisen hierbei in den Behälter und dienen gezielt als Abtropfelement für das an der Flügeloberfläche nach außen strömende Restwasser.

Die Wirkungsweise der Vorrichtung ist wie folgt :

Das aus einem nicht näher dargestellten Granuliergehäuse mit Schneideinrichtung geförderte Granulat-Wassergemisch gelangt über die Produkteinlaßleitung 10 in den Zulauftopf 14. Hier wird das Granulat bereits vorentwässert bzw. das Gemisch durch die Förderstufe 9 mittels deren Schneckensegmente 18 mit zunehmender Fördergeschwindigkeit nach oben gefördert. Bei Erreichen des Siebkörpers 19 wird das Wasser abgetrennt und im Auffangbehälter 8 eingefangen. Hierbei werden bis zu 98 % des Wasseranteils abgeschieden.

Über die weitere Trocknungszonen-Förder-stufe 24 Gebläsestufe 26 und Rohrstrecke 28 gelangt das trockene Granulat zur nicht näher dargestellten Abfüllstelle.

Die in der weiteren Förderstufe 24 abgeschiedenen Flusen werden im Flusenfilter 20 aufgefangen.

In begrenzten zeitlichen Abständen muß das Flusenfilter 20 gereinigt werden. Bei Bedarf können die Flusen mittels Restwasser zeitweilig über ein mit dem Flusenfilter 20 verbundenes Ablau-frohr 31 und das Absperrventil 32 ausgeschieden werden.

Die im Auffangbehälter 8 eingefangene Wassermenge gelangt über den freien Durchgang am Leitblech 21 in den Ansaugtopf 13. Eventuell im Ansaugtopf 13 sich ansamelnde Luft kann durch den Spalt 33 am Leitblech 21 entweichen. Das Wasser im Ansaugtopf 13 wird über die Ansaugpumpe 11 für den Granulattransport als Frischwasser in Pfeilrichtung nach oben gefördert. Der Wasserspeicher 17 im Gehäuse 1 dient der Aufnahme des in der Förderstufe 24 abgeschiedenen Restwassers und als Speicher für den Ansaugtopf 13 dessen Wasserspiegel 23 durch ein Schwimmerventil 22 geregelt ist.

Bei Produktwechsel genügt eine Überprüfung des Wasserspeichers 17 im Gehäuse 1 und ggf. dessen Austausch über die Ansaugpumpe 11 zur Reinigung.

**Patentansprüche**

1. Vorrichtung zum Entwässern und Trocknen von Kunststoffgranulat mit einem längsaxial angeordneten, mehrstufigen Entwässerungsrotor (6) mit Förderflügeln (18, 25) einem rohrförmigen Produkteinlaß (16) im Bereich der ersten zylinderförmigen Förderstufe (9) und einem Produktauslaß (28) im Bereich des Vorrichtungsdeckels wobei dem Entwässerungsrotor (6) ein nach oben offener bodenseitig verschließbarer und mit dem Anschluß einer Saugpumpe (11) verbindbarer Auffangbehälter (8) koaxial zugeordnet ist, der die erste Förderstufe (9) konzentrisch umschließt, welche von einem im Auffangbehälter (8) verankerten zylinderförmigen Zulauftopf (14) umgeben ist und eine Zylindermantellänge aufweist, die ein Mehrfaches der Länge jeder weiteren Förderstufe beträgt sowie am Umfang mit mehreren Schneckensegmenten (18) bestückt ist, dadurch gekennzeichnet, daß

a) der Entwässerungsrotor (6) von einem mit dem Zulauftopf (14) lösbar verbundenen Siebkörper (19) umgeben ist,

b) die erste Förderstufe (9) des Rotors mit einer Teillänge in den Zulauftopf (14) eintaucht,

c) die Schneckensegmente (18) der Förderstufe (9) in der Förderrichtung mit zunehmendem Steigungswinkel aufeinanderfolgen und

d) ein Gehäuse (1) zur Speicherung des Abtropfwassers vorgesehen ist.

2. Vorrichtung nach Anspruch 1, dadurch gekennzeichnet, daß die Anordnung des Auffangbehälters (8) in einer zur Längsachse des Gehäuses (1) parallelen Ebene erfolgt.

3. Vorrichtung nach den Ansprüchen 1 und 2, dadurch gekennzeichnet, daß der Auffangbehälter (8) in seinem unteren mit dem Sauganschluß (10) ausgebildeten Bereich zur Ausbildung eines Ansaugtopfes (13) einen vergrößerten Durchmesser des Zylindermantels aufweist, wobei ein in dessen Umfang ein gesetztes Schwimmerventil (22) den Wasserzulauf regelt.

4. Vorrichtung nach Anspruch 1, dadurch gekennzeichnet, daß der zylinderförmige Zulauftopf (14) konzentrisch zum Auffangbehälter (8) an einer in dessen Boden verankerten Stütze (15) befestigt ist.

5. Vorrichtung nach den Ansprüchen 1 und 4, dadurch gekennzeichnet, daß der Zulauftopf (14) einen senkrecht zu dessen Längsachse und in diesen über dem Sauganschluß (10) tangential einmündenden Produkteinlaß (16) aufweist.

6. Vorrichtung nach den Ansprüchen 1,4 und 5, dadurch gekennzeichnet, daß der Zulauftopf (14) aus einem perforierten Zylindermantel und geschlossenem Boden gebildet ist, welcher mit einem der Aufnahme des Kerndurchmessers der ersten Förderstufe (9) dienendes Lager (34) ausgebildet ist.

7. Vorrichtung nach einem der vorhergehenden Ansprüche, dadurch gekennzeichnet, daß ein im Auffangbehälter (8) zwischen dem Zulauftopf (14) und dem Ansaugtopf (13) oberhalb des Sauganschlusses (10) angeordnetes in Form einer Ablaufrinne ausgebildetes im oberen Bereich mit einem Luftspalt versehenes Leitblech (21) sich über einen Teil des freien Durchtrittquerschnittes des Auffangbehälters (8) erstreckt.

8. Vorrichtung nach Anspruch 1 bis 3, dadurch gekennzeichnet, daß dem Auffangebhälter (8) ein dessen Außenmantel im Eintrittsbereich der ersten Förderstufe (9) und den Siebkörper (19) ringförmig umschließender Flusenfilter (20) zugeordnet ist, dessen Befestigung im Gehäusedeckel (5) erfolgt.

9. Vorrichtung nach Anspruch 1, dadurch gekennzeichnet, daß der ersten Förderstufe (9) abschließend eine Förderstufe (24) nachgeordnet ist, deren entgegen der Förderrichtung gerichtete Stirnfläche die Basis einer kegelförmigen längsaxial der Förderstufe (9) verlaufenden Ausnehmung (35) bildet.

## Claims

1. Apparatus for the draining and drying of synthetic material granulate with a multistage draining rotor (6) arranged in the longitudinal axis and with conveyor blades (18, 25), a tubular product inlet (16) in the region of the first cylindrical conveying stage (9) and a product outlet (28) in the region of the apparatus cover, wherein a collecting container (8), which is open upwardly, closable at the base and connectable with the connection of a suction pump (11), is co-axially associated with the draining rotor (6) and concentrically encloses the first conveying stage (9), which is surrounded by a cylindrical inflow pot (14) anchored in the collecting container (8) and displays a cylinder shell length which amounts to a multiple of the length of each further conveying stage as well as is equipped with several worm segments (18) at the circumference, characterised thereby, that

a) the draining rotor (6) is surrounded by a sieve body (19) detachably connected with the inflow pot (14),

b) the first conveying stage (9) of the rotor dips by a partial length into the inflow pot (14),

c) the worm segments (18) of the conveying stage (9) follow one upon the other with increasing angle of inclination in the conveying direction and

d) a housing (1) is provided for the storage of the drip water.

2. Apparatus according to claim 1, characterised thereby, that the arrangement of the collecting container (6) takes place in a plane parallel to the longitudinal axis of the housing (1).

3. Apparatus according to the claims 1 and 2, characterised thereby, that the collecting container (8) in its lower region constructed with the suction connection (10) displays an increased diameter of the cylindrical shell for the formation of a suction pot (13), wherein a float valve (22) inserted into its circumference regulates the inflow of water.

4. Apparatus according to claim 1, characterised thereby, that the cylindrical inflow pot (14) is fastened concentrically with the collecting container (8) at a support (15) anchored in its base.

5. Apparatus according to the claims 1 and 4, characterised thereby, that the inflow pot (14) displays a product inlet (16), which is perpendicularly to its longitudinal axis and opens into it tangentially by way of the suction connection (10).

6. Apparatus according to the claims 1, 4 and 5, characterised thereby, that the inflow pot (14) is formed of a perforated cylindrical shell and a closed base which is constructed with a bearing (34) serving to receive the core diameter of the first conveying stage (9).

7. Apparatus according to one of the preceding claims, characterised thereby, that a metal guide plate (21), which is arranged above the suction connection (10) between the inflow pot (14) and the suction pot (13), is constructed in the shape of a drainage gutter and is provided with an air gap in the upper region, extends over a part of the free passage cross-section of the collecting container (8).

8. Apparatus according to claim 1 to 3, characterised thereby, that the collecting container (8) is associated with a fluff filter (20), which annularly encloses both its outer shell in the entry region of the first conveying stage (9) and also the sieve body (19) and the fastening of which takes place in the housing cover (5).

9. Apparatus according to claim 1, characterised thereby, that arranged downstream of and terminating the first conveying stage (9) is a conveying stage (24), the end face of which directed against the conveying direction forms the base of a conical recess (35) extending longitudinally of the axis of the conveying stage (9).

## Revendications

1. Dispositif pour enlever l'eau de granulés de matière plastique et pour les sécher, ce dispositif comportant un rotor (6) d'élimination d'eau, à plusieurs étages, disposé le long d'un axe longitudinal et comportant des ailettes (18, 25) pour provoquer une avance, une entrée (16) tubulaire de produit dans la zone du premier étage (9) cylindrique d'avance et une sortie (28) de produit dans la zone du couvercle du dispositif, un récipient collecteur (8) ouvert vers le haut, pouvant être fermé vers le bas et pouvant être relié au raccord d'une pompe (11) aspirante étant coaxialement associé au rotor (6) d'élimination de l'eau, ce récipient entourant concentriquement le premier étage (9) d'avance qui est lui-même entouré par un pot (14) récepteur, de forme cylindrique, ancré dans le récipient collecteur (8) et présentant une certaine longueur d'enveloppe de cylindre correspondant à un multiple de la longueur de chaque autre étage d'avance et étant équipé à sa périphérie de plusieurs segments (18) de vis, dispositif caractérisé en ce que

a) le rotor (6) d'élimination de l'eau est entouré d'un corps (19) de tamis relié amoviblement au pot (14) récepteur,

b) le premier étage (g) d'avance du rotor plonge, par une partie de sa longueur, dans le pot (14) récepteur,

c) les segments (18) de vis de l'étage (9) d'avance se suivent mutuellement avec un angle croissant d'inclinaison dans le sens de l'avance, et

d) une enceinte (1) est prévue pour accumuler l'eau qui s'égoutte.

2. Dispositif selon la revendication 1, caractérisé en ce que le récipient collecteur (8) est disposé dans un plan parallèle à l'axe longitudinal de l'enceinte (1).

3. Dispositif selon les revendications 1 et 2, caractérisé en ce que le récipient collecteur (8) présente, dans sa partie inférieure comportant le raccord (10) d'aspiration, un plus grand diamètre de l'enveloppe cylindrique pour former un pot (13) d'aspiration, et une soupape (22) à flotteur, montée à la périphérie de ce pot, régule l'arrivée d'eau dans le pot.

4. Dispositif selon la revendication 1, caractérisé en ce que le pot (14) d'aspiration, de forme cylindrique, est fixé, concentriquement au récipient collecteur (8), à un montant (15) de support ancré au fond du dispositif.

5. Dispositif selon les revendications 1 et 4, caractérisé en ce que le pot (14) récepteur présente une entrée (16) de produit, perpendiculaire à son axe longitudinal et débouchant tangentiellement dans ce pot en empruntant le raccord (10) d'aspiration.

6. Dispositif selon les revendications 1, 4 et 5, caractérisé en ce que le pot (14) récepteur est formé d'une enveloppe cylindrique perforée et d'un fond fermé, comportant un palier (34) servant à loger le diamètre de base du premier étage (9) d'avance.

7. Dispositif selon l'une des revendications précédentes, caractérisé en ce qu'une tôle (21) de guidage disposée dans le récipient collecteur (8) entre le pot (14) collecteur et le pot (13) d'aspiration, au-dessus du raccord (10) d'aspiration, en forme de rigole d'écoulement et munie dans sa partie supérieure d'une fente de passage d'air, s'étend sur une partie de la section libre de passage du récipient collecteur (8).

8. Dispositif selon les revendications 1 à 3, caractérisé en ce qu'un filtre (20) de retenue de particules, dont l'enveloppe extérieure entoure, en forme d'anneau, une zone d'entrée dans le premier étage (9) d'avance et le corps (19) de tamis, est associé au récipient collecteur (8), ce filtre étant fixé au couvercle (5) de l'enceinte.

9. Dispositif selon la revendication 1, caractérisé en ce qu'un étage (24) d'avance, fermant le premier étage (9) d'avance, est disposé derrière celui-ci, la face frontale, dirigée dans le sens contraire de l'avance, de cet étage formant la base d'un creux (35) conique dirigé le long de l'axe longitudinal de l'étage (9) d'avance.

Fig. 1

EP 0 133 460 B1

Fig. 2

Fig. 3

Fig. 4

Fig. 5